# EUROPEAN PATENT APPLICATION

(11) **EP 2 466 492 A1**
(43) Date of publication of application: **20.06.2012**
(21) Application number: 10196002.9
(22) Date of filing: 20.12.2010
(51) Int. Cl.: G06F 17/30

(54) **A method of making text data associated with video data searchable**

(71) Applicant: Vaclik, Paul Peter, Gosforth Newcastle upon Tyne Tyne and Wear NE3 2LD (GB)
(72) Inventor: Vaclik, Paul Peter, Gosforth Newcastle upon Tyne Tyne and Wear NE3 2LD (GB)
(74) Representative: Archer, Graham John

(57) **Abstract**

A method of making text data associated with video data searchable is disclosed. The method includes receiving and storing video data and subtitle text data on a server. Processing this data to extract the text data and creating a meta data package in which the text data can be searched by an internet search engine. The video data is then linked to web page data so that said video data can be viewed on a web page using a browser. Then when a search engine sends data indicating a search result relating to text in the text data, directing the browser to display the web page and video from the point in the video that matches the searched for text.

## Description

The present invention relates to a method and computer program for making text data associated with video and/or audio data searchable and relates particularly, but not exclusively, to a method of processing subtitled data to make the subtitles searchable using an internet search engine.

The addition of subtitles to video data is well known and it is commonplace for video data, which is available on the internet, to be optionally accompanied by subtitled data. This data can be in the form of text data that has a time associated with it, for example a start and end time. As a result, as the video streams the text data is displayed on screen from the start time to the end time. This subtitled data either forms part of the video data file or can be a separate file associated with the video data.

A small number of video enabled web sites implement bespoke tools to allow this subtitled data to be searched to find the part of the video that contains the searched for text. However, the subtitled data cannot generally be searched using standard internet search engines.

Alternatively, the subtitled data can be taken as a transcript of the text of the video and added to the text data of the web page into which the video is streamed. However, this is only satisfactory if a transcript of the text is required as part of that page and otherwise places additional undesirable text on the page in an unsatisfactory manner. Furthermore this solution will only allow a search engine to target the entire page containing the transcript. It does not allow the search engine to direct the user to the portion of the video that is most relevant to the search. Such bespoke implementations are costly and technically challenging to implement and cannot be readily reapplied in a generic way or integrated into commonly used CRM / web delivery tools.

Preferred embodiments of the present invention seek to overcome the above described disadvantages of the prior art.

According to an aspect of the present invention, there is provided a method of making text data associated with video data searchable, comprising the steps of:
receiving and storing on at least one data storage and processing device video data and text data, in which portions of the text data are associated with portions of the video data;
processing said data to extract said text data and to create at least one data package in which the text data can be searched by at least one data searching program;
linking said video data to display data such that said video data can be viewed together with said display data on a display device using a display program;
receiving, from a display program running on a computer via a data searching program, a search request relating to said data package and specifying the text searched for that was found in said text data; and
directing the display program to display said video data and said display data using said display program such that the video data starts displaying video images adjacent the portion in the video data associated with the portion of the text data found in the search.

By extracting text data and creating a searchable data package then responding to a search request by directing a display program to display the video data within the display data from a starting point adjacent the portion of the video data associated with the text data found in the search provides the advantage that a person searching for a section of text is able to jump immediately from the data searching program page to the relevant part of the video.

Furthermore, the extraction of text data, creation of the searchable data package and the redirection of the search result to the relevant part of the video data can be controlled and operated automatically from a single server. This means that a person creating the display data, the web page content creator, is able to simply link to the video data using a freely available player and the text data associated with that video will be immediately linked to the newly created web page. As a result, to the web page content creator a process of including video into a web page remains unchanged. The display data may be hosted, maintained, delivered etc using ANY third party content management or delivery system. As a result the content producer can plug the system of the present invention into their existing website without changing CMS and differentiates the present invention from the prior art.

It is also the case that the extraction of text data and creation of the data package can happen automatically if the text data already forms part of, or is associated with, the video data file. There is therefore a significant reduction in the barrier for those uploading video data and for the web page content creator to make the text data associated with the video file searchable by internet search engines. Furthermore, the searchable text need not appear on the page allowing the content provider to maintain any aesthetic qualities of the page without the need for additional text to be included.

In a preferred embodiment, in said step of extracting said text data, said uploaded text data and said video data are extracted from the same file.

The method may further comprise creating at least some of said text data by using voice recognition or any other pattern recognition software to which audio data associated with said video data is applied.

By creating the text data using voice recognition software applied to the video data, the advantage is provided that any video file with an audio track within it that contains spoken language can be uploaded and made available via the internet with the spoken words being searchable using any standard search engine.

The method may further comprise creating at least some of said text data using character recognition software applied to said images of said video data.

By using character recognition software to create all or additional text data from images in the video data, the advantage is provided that text which may form part of the video image but does not form part of the dialogue can be included in the searchable subject matter. For example, the title of the video data may only appear on screen and not form part of the dialogue. Furthermore, if subtitles have been applied to the video image but there is no associated text data, for example a subtitled film with subtitles forming part of each frame, the extraction of text data can be undertaken using character recognition software.

In another preferred embodiment the data package comprises a meta document.

By creating a meta document to contain the text data in the data package, the advantage is provided that the text is not visible to most internet users. As a result, in order to have access to the words in the video, the video must be watched thereby placing the words in their intended original context, if this is important.

In a further preferred embodiment the video data is linked to said display data at least some of said display data is added to said data package.

By including some of the display data in the data package together with the text data, the advantage is provided that a person searching for a video has the best opportunity of finding what they are looking for. For example, if a person has previously watched a video and can remember some of the text of the dialogue from the video and other information that formed part of the display data, which might be the title or a comment about the video, if that particular phrase is not used in the dialogue of the video data, this text can still be searched.

In a further preferred embodiment the video data and said display data are held on separate data storage and processing devices.

The method may further comprise using said searched for text to conduct a further search for all occurrences of said searched for text within text data associated with said video data.

By conducting a further search within the text data for all occurrences of the search text, the advantage is provided that the web browser can be directed to the most appropriate example of the use of the text within the video data and the video started at a point adjacent that point.

In a preferred embodiment the display program is directed to start displaying said video at a predetermined point before the point in said video data that said searched for text is associated.

In another preferred embodiment the predetermined point is a predetermined time.

In a further preferred embodiment the predetermined point is a predetermined number or portion of a scene.

By either starting the video at a predetermined time or predetermined scene before the searched-for text is spoken provides the advantage that the user is able to view the text in a reasonable context.

According to another aspect of the present invention there is provided a computer program for making text data associated with video data searchable, comprising the steps of:
first computer code for uploading video data and text data to at least one data storage and processing device, in which portions of the text data are associated with portions of the video data;
second computer code for extracting said text data and creating at least one data package in which the text data can be searched by at least one data searching program;
third computer code for linking said video data to display data such that said video data can be viewed together with said display data on a display device using a display program;
fourth computer code for receiving, from a display program running on a computer via a data searching program, a search request relating to said data package and specifying the text searched for that was found in said text data; and
fifth computer code for directing the display program to display said video data and said display data using said display program such that the video data starts displaying video images adjacent the portion in the video data associated with the portion of the text data found in the search.

In a preferred embodiment the second computer code extracts said uploaded text data and said video data from the same file.

The computer program may further comprises sixth computer code for creating at least some of said text data by using voice recognition software to which audio data associated with said video data is applied.

The computer program may also further comprise seventh computer code for creating at least some of said text data using character recognition software applied to said images of said video data.

In a preferred embodiment the data package comprises a meta document.

In another preferred embodiment the third computer program code links said video data to said display data at least some of said display data is added to said data package.

In a further preferred embodiment the third computer code links said video data and said display data that are held on separate data storage and processing devices.

The computer program may further comprise eighth computer code for using said searched for text to conduct a further search for all occurrences of said searched for text within text data associated with said video data.

In a preferred embodiment the fifth computer code directs said display program to start displaying said video at a predetermined point before the point in said video data that said searched for text is associated.

In another preferred embodiment the fifth computer code said predetermined point is a predetermined time.

In a further preferred embodiment the fifth computer code predetermined point is a predetermined number or portion of a scene.

A preferred embodiment of the present invention will now be described, by way of example, and not in any limitative sense, with reference to the accompanying drawings in which:
Figure 1 is a schematic representation of the apparatus used in the setting up and utilising of the present invention;
Figure 2 is a flow chart showing the steps undertaken in a part of the method of the present invention;
Figure 3 is a flow chart showing an alternative series of step undertaken as an alternative to those in Figure 2;
Figure 4 is a flow chart showing a series of steps undertaken in another part of the method of the present invention;
Figure 5 is a flow chart showing the steps undertaken in a further part of the method of the present invention; and
Figure 6 is a flow chart showing the steps undertaken in a final part of the method of the present invention.

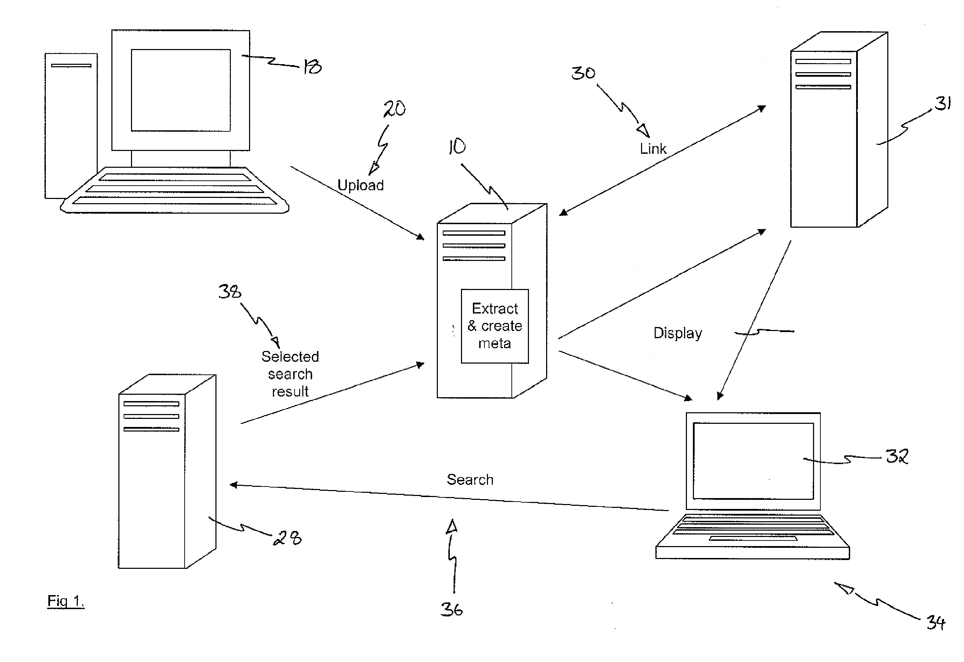

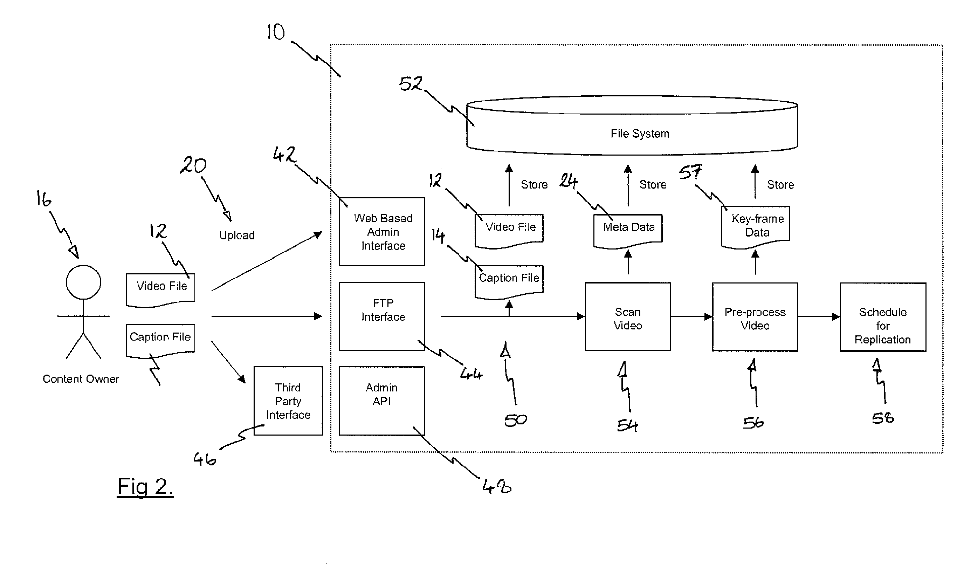

Referring to Figure 1 and 2, a method of making text data associated with video and/or audio data searchable is undertaken using a computer program running on a data storage and processing device, for example a video data server 10. The video server receives an upload of video data 12 and text data 14 from a video content owner operating a content owner computer 18, at step 20.

The video data 12 and text data 14 are associated with each other so that portions of the text data are specifically associated with portions of the video data. This is most typically where subtitles are optionally displayed as part of the video data and this subtitle or caption data forms part of or all of the text data. It should be noted that throughout the present application the use of the term video also includes audio data where an audio track can be played without the inclusion of moving video images.

At step 22 video data server 10 processes the uploaded video data 12 and text data 14 to extract the text data and to create at least one data package in the form of a text meta document 24. This meta document can be searched by data searching programs running on the internet, for example search engines 26 running on search engine servers 28.

Next the video data 12 is linked, at step 30, to display data in the form of an internet web page, stored on 3^{rd} party web content server 31, so that the video data can be viewed together with the web page on a display device such as a screen 32 of a standard computer 34 using a display program such as an internet browser. This linking of data also allows the video and web page to be viewed on other computing devices than a standard computer using any web browsing program capable of displaying video data.

The video data is now set up to run in a standard manner. A person accessing the web page by a simple link to that page or by typing in the URL will be presented with the web page and a video data ready to stream from the start of the video data file.

Since the meta document 24 is available for searching by search engine 26, the text data 14 contained within the meta document 24 can be indexed by search engines 26 and made available for searching from search engine server 26 by computer device 34.

If computer device 34 conducts a search for text that is found in the text data 14 of meta document 24 these results would be displayed as a list of search results in the web browser on computer device 34, the form that the results take is specific to the search engine used. If this item is selected the computer 34 requests this search result to the search engine server 28 at step 36 and the search engine server 28 requests this selection to the video data server 10 at step 38. The mechanism for redirecting a user clicking on a search result to the required web page is specific to the search engine being used and therefore does not for part of the present invention. The web browser running on computer 34 is then directed to display the video data 12, which is downloaded from video data server 10, together with the web page data which is downloaded from web content server 31 at step 40 the video data starts displaying the video images adjacent the portion of the video data associated with the portion of text found in the search.

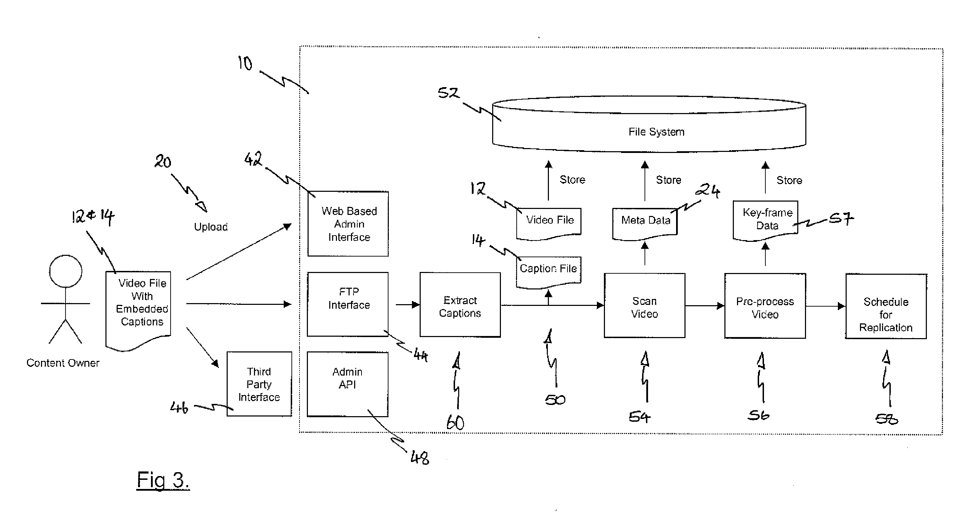

The method will now be described in greater detail with additional reference to Figures 3 to 6. The upload step 20 is shown in more detail in Figure 2 in which the video data 12 and text data 14 are held in separate files and are uploaded to the video data server 10 using any of a web based admin interface 42 a FTP interface 44 or a third party interface 46 via an administration API 48. At step 50 the video and text data files are stored in the file system 52 of video data server 10 so that the video data 12 and text data 14, for example subtitle data, can be streamed or downloaded to a third party computer 34 in the normal way. At step 54 the video data 12 and text data 14 files are associated with each other and the text meta document 24 is created and associated with the data files. At this stage the video file is also pre-scanned to ascertain key data such as frame rate and band width requirements etc. This data is stored in the text meta document 24. At step 56 the video file is pre-processed to allow fast random access by extracting key frame pointers. This data is stored in a proprietary key-frame map file 57. Finally at step 58 if the video data server 10 is part of a cluster the video data file 12, text data file 14 and text meta document file 24 are scheduled for replication on other servers in the cluster.

With specific reference to Figure 3, the steps shown therein are identical to those in Figure 2 and set out above except that the video data 12 and text data 14 are embedded in a single file. As a result, an additional step 60 is undertaken to extract the text data 14 from the video data 12 to create respectively separate files. Examples of file formats used for subtitle captioning include, but are not limited to, W3CTimed Text, XMP and CMML. Examples of video files that may include embedded captioned subtitle data include, but are not limited to, MP4.

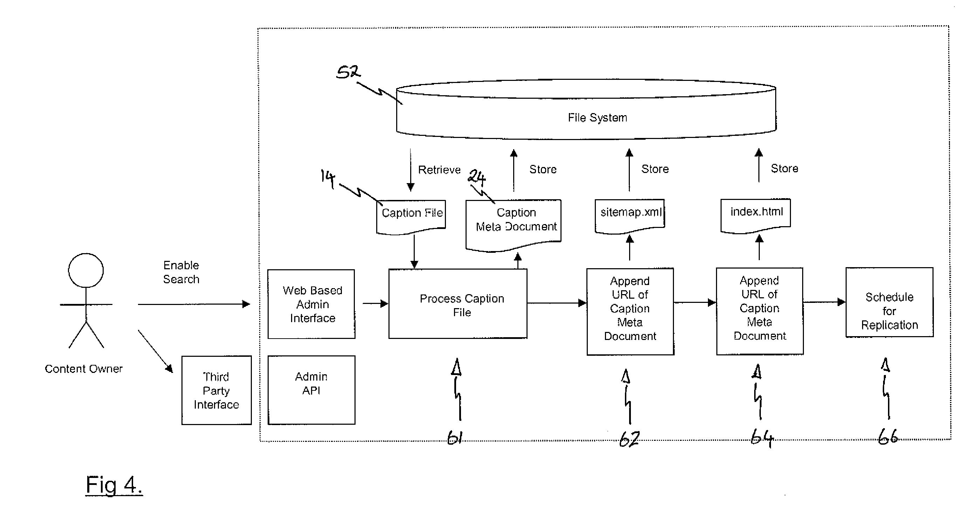

Referring to Figure 4, the step of creating the data package, the text meta document 24, is then instigated, assuming that the option for enabling search of the text data has been set. At step 61 the text data file 14 is retrieved and processed to add the text data into the text meta document 24 to make the text search friendly and search readable to search engines 26. Some invalid HTML attributes are filtered out on the fly when the page is returned as a result of a search engine robot request. Further formatting may also be applied at this stage to ensure that the document is suitable for use as a preview, should the search engine choose to use the page in this way. For example, the time data that tells when the text should be displayed is removed.

As a minimum step the text data is added verbatim into the text meta document 24 and restored in the file system 52. However, the text is broken up into sections and each section associated with a time within the video file. In order to ensure that the text meta document 24 is found and searched by search engines, at step 62 the URL of the text meta document 24 is added to a sitemap XML file so that it can be found by search engine robots. This XML file is submitted to a range of known search engines. It should be noted that the URL of the video server 10 must be submitted to the search engines in the normal way. However, this need only be done once, as long as the search engine periodically re-indexes the sitemap file. Similarly at step 64, the URL of the data meta document 24 is added to a generic HTML index page to allow search engines which do not support the site map protocol to index the content. The sitemap.xml and index.html files are also stored on the file system 52. At step 66 if the video data server 10 is part of a cluster, all the newly created and updated files are scheduled for replication on other servers in the cluster.

Once the steps set out in Figures 2 or 3 and 4 have been undertaken, the video and text data are available to be served to clients. If the publish / disable option is set to "publish", the server will now serve the content when the appropriate URL is requested. The URL required to access the files can be derived from the system configuration and is also shown in the online administration system and is returned as part of a successful API call.

Content owners may also use the online administration system to directly access the code to deliver a video player for the video by choosing from a palette of available video player options. This code can be pasted directly into a web page to show the video, thereby creating the link between the video data and the display data or web page at step 30. Web developers may also use freely available client side software development kits (SDK's) to write their own custom video player components. SDK's are available for platforms including, but not limited to, Flash™, Silverlight™ and HTML5 javascript™.

If the content owner wishes to create a web page that will respond to video search results using the text data and starting the video in the appropriate part of the video, the page must also load a javascript library that intercepts incoming requests to the page. This is explained in greater detail below.

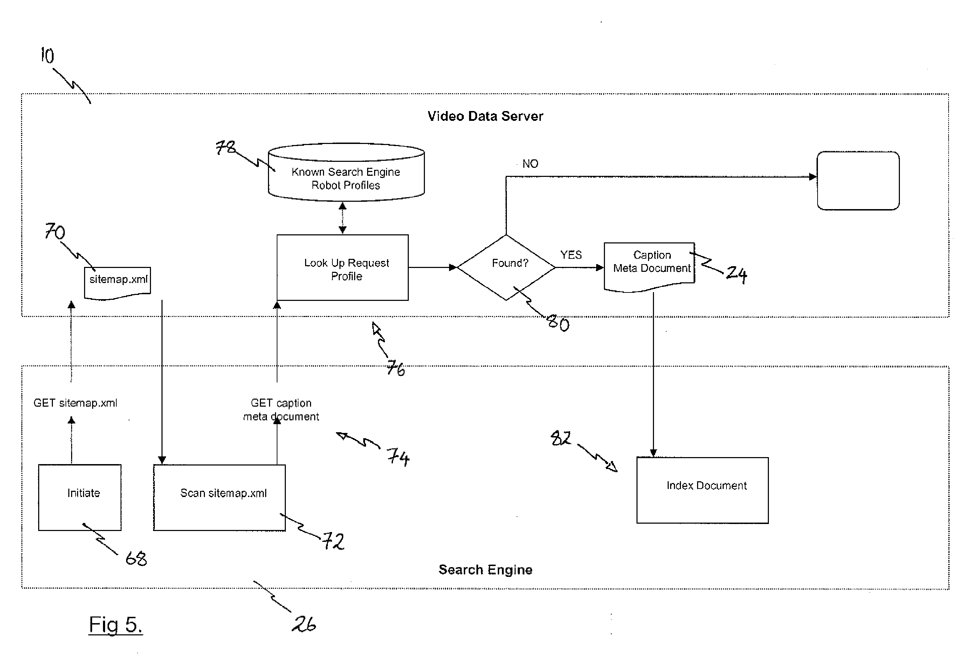

With reference to Figure 5, the indexing of the data meta document 24 by search engines will now be described. When the URL of the text meta document 24 is requested this will result from one of the following routes.
1. The request has been made by a search engine robot attempting to index the content
2. The request has been made as a result of a person searching clicking on a result of a search engine search
3. The request is made by some other route. This will normally not occur as the URL of the data meta document have no practical use outside the search mechanism and therefore should not directly be used. However, if this does occur the server will handle this scenario as set out below.

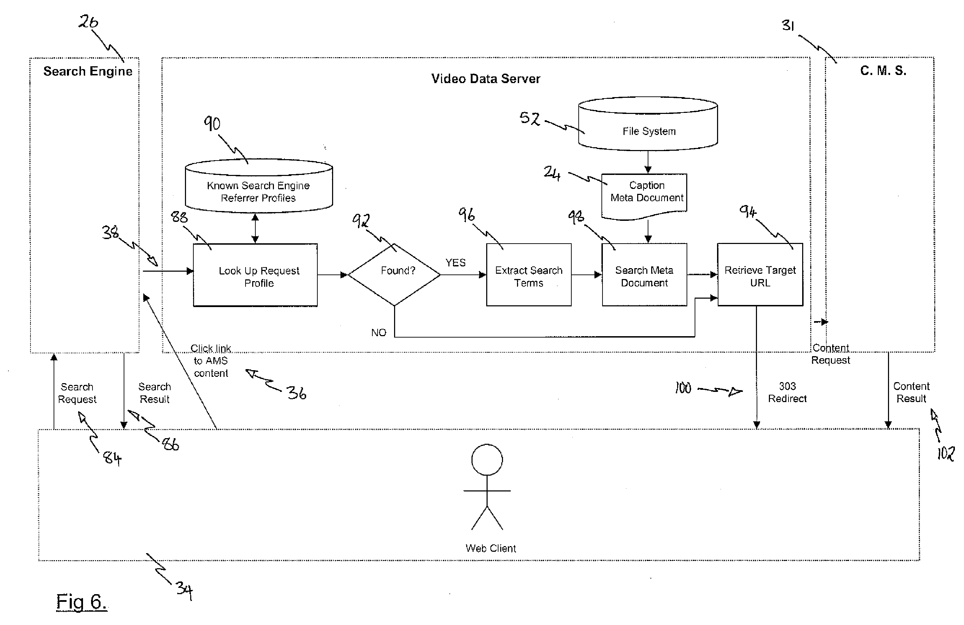

With reference to Figure 5, a search engine 28 initiates at step 68 a search of the video data server 10 that is connected to the internet. The search engine retrieves the site map XML file 70 and scans at step 72 the site map XML document. Search engines which do not support the sitemap protocol will use the index.html file, containing a list of links to the data meta documents instead. This results in the search engine at step 74 attempting to get the data meta document. At step 76, this incoming request is matched against a database 78 of known search engine robot profiles. If at step 80 a match is found then access to the text meta document 24 is allowed and the document indexed at step 82. The server will reformat the text meta document before delivery to the search engine to ensure that the delivered document is HTML compliant and to provide a document which will be aesthetically pleasing and useful if displayed by the search engine as an instant preview. This means that the text data 14 is now available to be searched on that search engine. If, at step 80, the request does not match the known search engine robot profiles the request is assumed to be as a result of a user clicking on a result of a search engine search and the steps set out in Figure 6 are undertaken.

With reference to Figure 6, a web client computer device 34 makes a search request, at step 84, to search engine 26 running on search engine server 28 and the results of that search are sent back to computer device 34, at step 86. When a result is selected by the web client computer device 34, at step 36, the search engine 26, at step 38, refers the request to the video data server 10. At step 88, the request from the search engine 26 is matched against a list of known search engines held in a data base 90 of known search engine referral profiles. If, at step 92, a match is not found it is assumed that the request is made from an unknown search engine or via some other route. In this case no search terms can be extracted from the request and the target URL is retrieved at step 94. This results in the web page including the video data to be displayed in the normal manner and the video started from the beginning.

If, at step 92, a search engine referral profile is identified the search terms, that is the words and other directives used by the operator of computer device 34 in their search, are extracted at step 96 to determine the text from the text data 14 that was searched for and found. From the file system 52, the data meta document 24 is retrieved and, at step 98, a search within that document is undertaken using known searching techniques the portion of the text data that is most closely associated with the searched for text is identified and the corresponding portion of the video data is also identified to provide the best starting point for the video. This may be at exactly the point the words correspond with the video data, at a predetermined period of time before, or at the start of an earlier scene as identified, for example, from the key-frame data 58. At step 94 the target search URL associated with this content is retrieved, the standard formal search terms and suggested start point (if found, if not found the start of video is used) are appended and an HTTP 303 redirect response is generated, at step 100. The web client computer device 34 will transparently use this to redirect to the web page that contains the video content and the web page holding server 31 or client management server 31 will in response to a request from the video data server 10 download the content result at step 102 to the web client computer device 34. Finally, the web client receives the search target page and a javascript function, loaded on the page, will run when the page loads to extract the search terms and suggest the start point, also making them available to other functionality on the page. This is then used to automatically start the video at the suggested point or can be used to perform further functions such as deeper search for all instances of the search terms. The method of the present invention can use standard video player functions and other embeddable components to make use of the search features.

An example of the method of the present invention is set out below.

An online news organisation (XYZNews) uses the video server 10 to host it's video content and some other third party Content Management System (CMS) to create and publish its news website via web server 31.

The date is January 1^{st} 2010 and an editor (the content owner) wishes to create a news item about New Year's parties around the UK. The content owner has been sent a video segment that has already been edited and converted into Flash (FLV) format ready for streaming. A caption file for the video has also been created.

The content owner uses from his computer 18 use the web based administration system to upload (step 20) the video and caption files. The caption file looks like this:

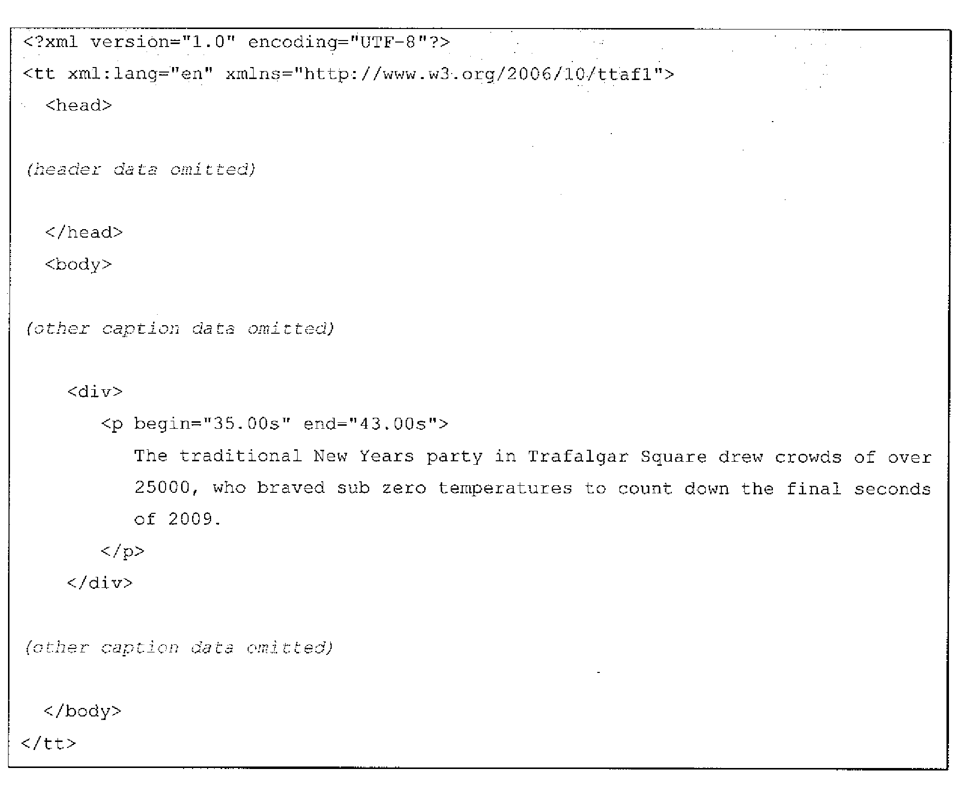

Note that at 35 seconds into the video, the dialogue includes the phrase "The traditional New Years party in Trafalgar Square...".

The content owner uploads this content to the video data server 10 **video. xyznews. com** into a directory /**content/2010/01/01** and gives the video the filename **newyearparty. flv**.

The content owner now creates a web page, using the company's CMS and inserts a video player component to play the video within the webpage. The content owner points the video player to the content URL:
**http://video.xyznews.com/content**/2010/01/01/**newyearparty.flv**

The content owner now publishes the web page on the company website at the URL:
**http://www.xyznews.com/newsitems**/2010/01**/**01/**newyearparty**

The content page may now be viewed by the general public and the embedded video clip will be played as normal.

The content owner uses the web based administration system to set this URL as the search target URL for the video. The content owner also enables the search functionality for this video. Doing this will cause the video data server 10 to automatically execute the steps detailed in connection with Figure 4 above for this content item.

As a result of step 61, a data meta document 24 will be created which will be made available at the URL:
**http://video.xyznews.com**/content/2010/01/01/_**newyearparty.ht ml**

The content meta document will look as follows although it should be noted that the "begin" and "end" timing information is retained even though this has no meaning in HTML. These invalid HTML attributes will be filtered out on the fly when the page is returned as a result of a search engine robot request. Further formatting may also be applied at this stage to ensure that the document is suitable for use as a preview, should the search engine choose to use the page in this way.

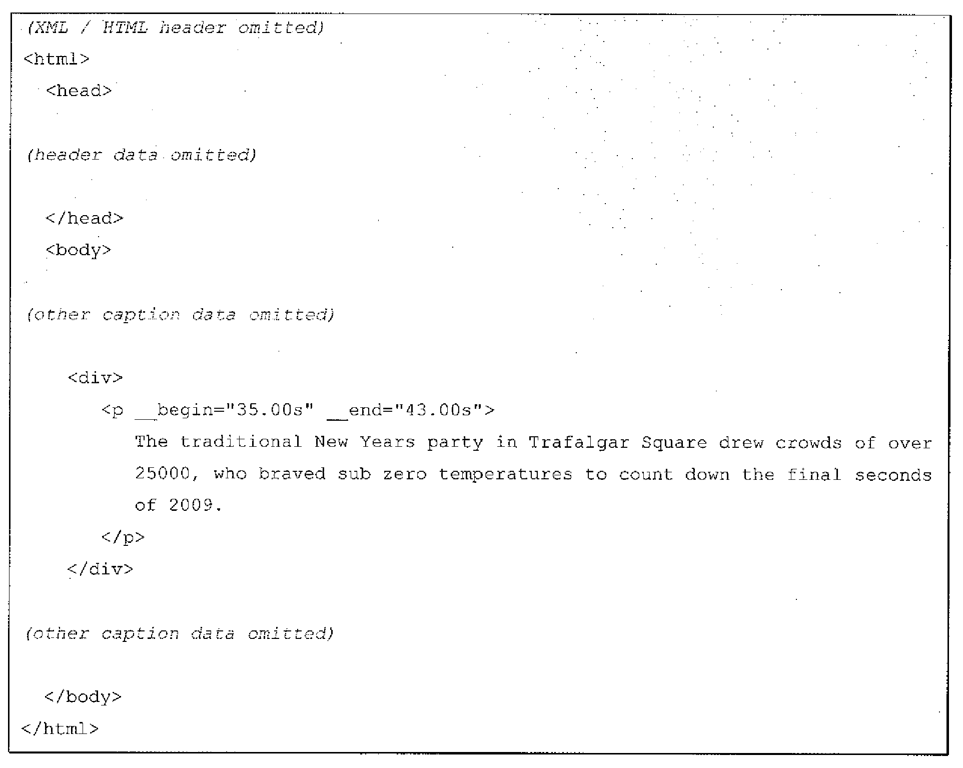

As a result of step 62, a sitemap document will be created or updated at the URL:
**http://video.xyznews.com/sitemap.xml**

The sitemap document will look like this:

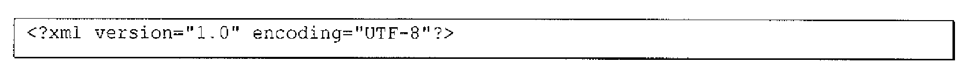

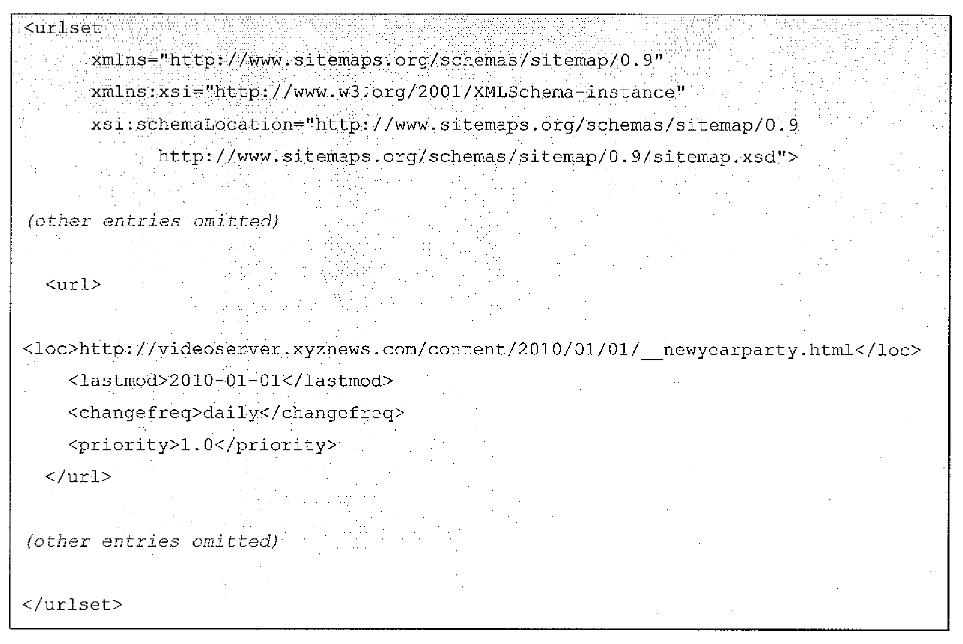

As a result of step 64, a generic index page will be created or updated at the URL:
**http://video.xyznews.com/index.html**

The index document will look like this:

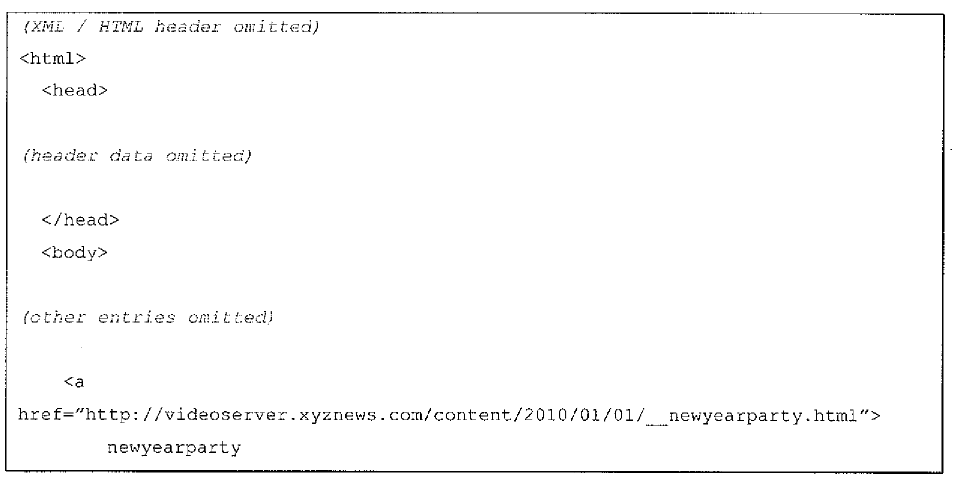

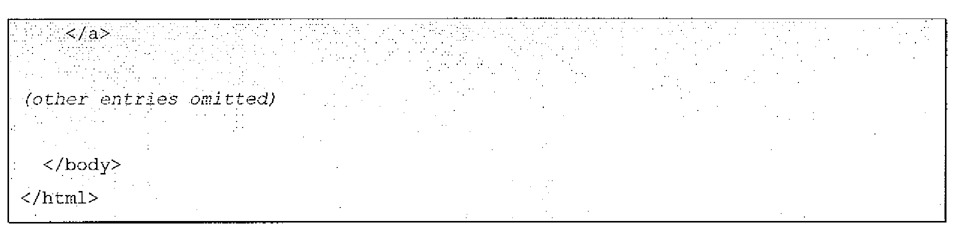

At some point after this search engine robots will scan the sitemap and / or generic index file. They will then attempt to scan the content meta document. The request will contain a recognisable User-Agent header, for example, a request from Google will look like this:
GET /content/2010/01/01/_newyearparty.html Http1.1
Host: videoserver.xyznews.com
User-Agent: Googlebot/1.0

The video data server 10 will recognise this header signature (as described in steps 76 and 80) and will return the content meta document, thereby allowing the search engine to index the content of the video, step 82.

At some point after this, the search engine will return this page in response to searches for terms found in the document. For example, assume that someone uses Google to search for the terms "New Year Trafalgar Square". Google should return a link to our example page (although there is no guarantee how far down the list of search results our link will be).

If a user clicks on this search result they will be directed to the content meta document URL, but the request will contain a recognisable Referrer header like this:
GET /content/2010/01/01/_newyearparty.html Http1.1
Host: videoserver.xyznews.com
Referer: http://www.google.co.uk/search?hl=en&q=new+year+trafalgar+square

The data server 10 will recognise this header signature (as described in step 38) and will process the request as follows:

The Referer header will be parsed, to find the search engine specific parameters that contain the original search terms (as described in step 96), which in this case are:
q=new+year+trafalgar+square

The data server 10 will use this to search the content meta document and find the best match (as described in step 98). In this the best match is this section:

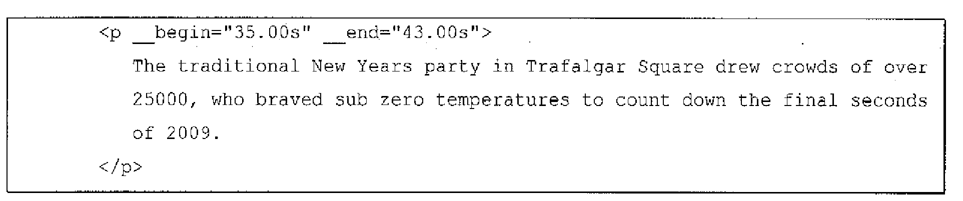

The data server 10 extracts the start time of 35.00s that will be used as the recommended start point to the video.

The data server 10 now redirects the user to the search target URL, appending the recommended start time in milliseconds (as described in steps 94, 100 and 102):
http://www.xyznews.com/newsitems/2010/01/01/newyearparty?_amsstart=35000 &_amsq=new+year+trafalgar+square

The XYZ News Content Management System will now receive this request and deliver the page to the user's browser. Javascript on the page will now parse the request URL to extract the recommended start time. This will then be used to make a request to the video server to stream the video from the recommended start point.

The above example describes a user experience that demonstrates the entire video search process. However, the server API and client side player libraries provide a great deal of flexibility. It is therefore possible to create many other usage scenarios.

It will be appreciated by persons skilled in the art that the above embodiments have been described by way of example only and not in any limitative sense, and that various alterations and modifications are possible without departure from the scope of the invention as defined by the appended claims.

## Claims

1. A method of making text data associated with video data searchable, comprising the steps of:
receiving and storing on at least one data storage and processing device video data and text data, in which portions of the text data are associated with portions of the video data;
processing said data to extract said text data and to create at least one data package in which the text data can be searched by at least one data searching program;
linking said video data to display data such that said video data can be viewed together with said display data on a display device using a display program;
receiving, from a display program running on a computer via a data searching program, a search request relating to said data package and specifying the text searched for that was found in said text data; and
directing the display program to display said video data and said display data using said display program such that the video data starts displaying video images adjacent the portion in the video data associated with the portion of the text data found in the search.

2. A method according to claim 1, further comprising one or more of the following features:-
(a) wherein in said step of extracting said text data, said uploaded text data and said video data are extracted from the same file;
(b) creating at least some of said text data by using voice recognition software to which audio data associated with said video data is applied;
(c) creating at least some of said text data using character recognition software applied to said images of said video data;
(d) wherein said data package comprises a meta document;
(e) wherein when said video data is linked to said display data at least some of said display data is added to said data package;
(f) wherein said video data and said display data are held on separate data storage and processing devices;
(g) using said searched for text to conduct a further search for all occurrences of said searched for text within text data associated with said video data; and
(h) wherein said display program is directed to start displaying said video at a predetermined point before the point in said video data that said searched for text is associated.

3. A method according to claim 2 further comprising either of the following features:-
(a) wherein said predetermined point is a predetermined time; or
(b) wherein said predetermined point is a predetermined number or portion of a scene.

4. A method of making text data associated with video data searchable substantially as hereinbefore described with reference to the accompanying drawings.

5. A computer program for making text data associated with video data searchable, comprising the steps of:
first computer code for uploading video data and text data to at least one data storage and processing device, in which portions of the text data are associated with portions of the video data;
second computer code for extracting said text data and creating at least one data package in which the text data can be searched by at least one data searching program;
third computer code for linking said video data to display data such that said video data can be viewed together with said display data on a display device using a display program;
fourth computer code for receiving, from a display program running on a computer via a data searching program, a search request relating to said data package and
specifying the text searched for that was found in said text data; and
fifth computer code for directing the display program to display said video data and said display data using said display program such that the video data starts displaying video images adjacent the portion in the video data associated with the portion of the text data found in the search.

6. A computer program according to claim 5 further comprising one or more of the following features:-
(a) wherein said second computer code extracts said uploaded text data and said video data from the same file;
(b) sixth computer code for creating at least some of said text data by using voice recognition software to which audio data associated with said video data is applied;
(c) seventh computer code for creating at least some of said text data using character recognition software applied to said images of said video data;
(d) data package comprises a meta document;
(e) wherein when said third computer program code links said video data to said display data at least some of said display data is added to said data package;
(f) wherein said third computer code links said video data and said display data that are held on separate data storage and processing devices;
(g) eighth computer code for using said searched for text to conduct a further search for all occurrences of said searched for text within text data associated with said video data; and
(h) wherein said fifth computer code directs said display program to start displaying said video at a predetermined point before the point in said video data that said searched for text is associated.

7. A computer program according to claim 6 further comprising either of the following features:-
(a) wherein in said fifth computer code said predetermined point is a predetermined time; or
(b) wherein in said fifth computer code predetermined point is a predetermined number or portion of a scene.

8. A computer program for making text data associated with video data searchable substantially as hereinbefore described with reference to the accompanying drawings.
